# EUROPÄISCHE PATENTSCHRIFT

(11) **EP 2 235 365 B1**
(45) Veröffentlichungstag und Bekanntmachung des Hinweises auf die Patenterteilung: **22.04.2015**
(21) Anmeldenummer: 08869837.8
(22) Anmeldetag: 24.12.2008
(51) Int. Cl.: F03D 9/02, F03D 3/06, F03D 9/00

(54) **WINDKRAFTANLAGE**
WIND POWER PLANT
ÉOLIENNE

(30) Priorität: 04.01.2008 CH 82008
(43) Veröffentlichungstag der Anmeldung: 06.10.2010
(73) Patentinhaber: Agile Wind Power AG, 8600 Dübendorf (DE)
(72) Erfinder: Patrick Richter, 8053 Zürich (CH); Karl Bahnmüller, 8953 Dietikon (CH)
(74) Vertreter: Rentsch Partner AG
(86) Internationale Anmeldenummer: PCT/CH2008/000549
(87) Internationale Veröffentlichungsnummer: WO 2009/086648

(56) Entgegenhaltungen:
- WO-A-97/20142
- DE-A1-102004 001 573
- DE-A1-102004 061 369
- DE-C- 121 755
- US-A- 4 052 134

## Beschreibung

### TECHNISCHES GEBIET

Die vorliegende Erfindung bezieht sich auf das Gebiet der alternativen Energieerzeugung mittels Windkraft. Sie betrifft eine Windkraftanlage gemäss dem Oberbegriff des Anspruchs 1.

### STAND DER TECHNIK

Windkraftanlagen, d.h. Anlagen zur Gewinnung von (elektrischer) Energie aus dem Wind, sind in den unterschiedlichsten Bauformen und Ausgestaltungen seit langem bekannt. Ein grundlegendes Unterscheidungsmerkmal derartiger Windkraftanlagen, die üblicherweise einen um eine Drehachse rotierenden Rotor aufweisen, ist die räumliche Anordnung der Drehachse: Bei so genannten Vertikalläufern dreht der Rotor um eine vertikale Achse, bei Horizontalläufern dreht der Rotor um eine horizontale Drehachse. Vertikalläufer, zu denen auch die Windkraftanlage der vorliegenden Erfindung zählt, haben gegenüber den Horizontalläufern vor allem den Vorteil, dass sie nicht auf eine bestimmte Windrichtung eingestellt zu werden brauchen.

Grundsätzlich ist die im Wind bei einer Windgeschwindigkeit v enthaltene Leistung proportional zu v³. Die Leistungsentnahme durch die Windkraftanlage verringert zunehmend die Windgeschwindigkeit. Im Extremfall (v -> 0) geht die Leistungsentnahme gegen 0, weil der Rotor nicht mehr durchströmt wird. Es gibt daher eine maximal mögliche Leistungsentnahme, die bei etwa 60% der im Wind enthaltenen Leistung liegt.

Die mögliche Leistungsentnahme aus dem Wind richtet sich insbesondere nach der Art des Rotors: Die Rotoren der Windkraftanlagen sind mit Rotorblättern ausgestattet, auf die im Windstrom zwei Arten von Kräften einwirken können, nämlich eine durch den Luftwiderstand des Rotorblattes verursachte Kraft in Strömungsrichtung und eine quer zur Strömungsrichtung wirkende Auftriebskraft, wie sie beispielsweise bei Flugzeugflügeln ausgenutzt wird.

Auf die hauptsächlich oder ausschliesslich auf dem Luftwiderstand basierenden Windkraftanlagen (Widerstandsläufer) bezieht sich die vorliegende Erfindung. Sie zeichnen sich durch ein hohes Rotordrehmoment aus, das bereits im Anlauffall zur Verfügung steht. Aus der WO-A2-2005/046638 ist eine Windkraftanlage bekannt, die als Vertikalläufer nach dem Widerstandsprinzip ausgebildet ist und in der Höhe mehrstufig sein kann. Nachteilig ist bei dieser Windkraftanlage, dass vergleichsweise wenige breite Rotorblätter eingesetzt werden, die um ihre Schwenkachse nur in einem sehr beschränkten Schwenkbereich von etwa 45° verschwenkbar sind. Hierdurch ist die Energiegewinnung nicht optimal. Zugleich wird die Konstruktion durch die Schwenkbewegungen erheblich belastet und muss besonders stabil ausgelegt werden.

Aus der JP-A-2005188494 ist eine als Vertikalläufer nach dem Widerstandsprinzip bzw. dem Auftriebsprinzip aufgebaute Windkraftanlage bekannt, deren Rotorblätter zwar einen Schwenkbereich von bis zu 180° haben, deren Rotorblätter jedoch so breit sind, dass nur wenige (vier bzw. sechs) auf dem für die Schwenkachsen vorgesehenen Umfangskreis angeordnet werden können. Auch hier ist die Ausbeute nicht optimal und der Lauf des Rotors besonders unruhig und mit grossen Störkräften beaufschlagt.

Auch WO-A-97/20142 zeigt eine windkraftanlage mit einem VertikalLäufer.

### DARSTELLUNG DER ERFINDUNG

Es ist daher Aufgabe der Erfindung, eine Windkraftanlage der eingangs genannten Art so auszubilden, dass die Nachteile bekannter Anlagen vermieden werden, und sich ein verbesserter Energiegewinn bei gleichzeitig herabgesetzter mechanischer Belastung der Struktur ergibt. Die Aufgabe wird durch die Gesamtheit der Merkmale des Anspruchs 1 gelöst. Wesentlich für die Erfindung ist, dass die Breite der Rotorblätter klein gewählt wird und kleiner als ungefähr 1/3 des Radius des Umfangskreises ist. Durch die schmalen Rotorblätter ergeben sich verschiedene Vorteile:
- Es können auf dem Umfangskreis mehr Rotorblätter mit vergleichsweise grossem Schwenkbereich angeordnet werden, welche die durch das Rotorvolumen hindurchgehende Windströmung effektiver in Drehmoment umsetzen und damit ausnutzen.
- Die Belastung der einzelnen Rotorblätter ist geringer, so dass diese leichter in die optimale Position einschwenken können und beim Umschwenken und beim Anstossen an den Endanschlägen des Schwenkbereiches weniger Störkräfte erzeugen.
- Soll der Winddruck auf die Rotorblätter durch die Reduzierung der Breite nicht verringert werden, können die Rotorblätter (in vertikaler Richtung) länger gemacht werden, um die gleiche Rotorfläche zu erhalten. Das Drehmoment wird dadurch gegenüber den breiten Rotorblättern erhöht, weil die Blattfläche insgesamt weiter aussen liegt.
- Die Schwenkvorgänge der Rotorblätter sind auf wesentlich mehr Schwenkachsen am Umfangskreis verteilt, was zu einem ruhigeren Lauf des Rotors und weniger Belastung der Lager und der Tragstruktur führt.

Eine bevorzugte Ausgestaltung der Erfindung zeichnet sich dadurch aus, dass auf dem Umfangskreis des Rotors zwölf oder mehr Rotorblätter schwenkbar angeordnet sind.

Besonders einfach gestaltet sich der Aufbau der Anlage, wenn dabei die Rotorblätter als gerade Blätter ausgebildet sind. Der Verzicht auf eine Flügelprofil oder Ähnliches bei den Rotorblättern vereinfacht die Herstellung erheblich und senkt dadurch die Herstellungskosten.

Weisen die Rotorblätter gemäss einer anderen Ausgestaltung jeweils eine Vorderkante und einer Hinterkante auf und sind in der Dicke zwischen der Vorderkante und der Hinterkante reduziert, lassen sich ohne Stabilitätseinbusse das Gewicht der Rotorblätter und die Grösse der von ihnen erzeugten Störkräfte weiter reduzieren.

Wenn andererseits die Rotorblätter ein aerodynamisches, vorzugsweise gestreckt tropfenförmiges, Querschnittsprofil mit einem spitzen Ende und einem runden Ende aufweisen, setzten die Rotorblätter bei ihrer Bewegung gegen den Wind dem Wind weniger Widerstand entgegen, so dass sich die Leistungsausbeute der Anlage insgesamt erhöht.

Vorzugsweise ist der Schwenkbereich der Rotorblätter jeweils auf einen Winkel von etwa 100° begrenzt ist. Hierdurch ist eine optimale Anpassung der Rotorblätter an die jeweilige Rotorstellung möglich, ohne dass übermässige Kräfte beim Anschlagen an den Endpunkten des Schwenkbereiches auftreten.

Besonders günstig ist es, wenn gemäss einer anderen Ausgestaltung der Erfindung die Rotorblätter jeweils in einer Endposition des Schwenkbereichs mit dem durch die Schwenkachse gehenden Radiusvektor des Umfangskreises einen Winkel von etwa 50° und in der anderen Endposition des Schwenkbereichs einen Winkel von etwa einschliessen.

Eine einfache Möglichkeit, den Schwenkbereich festzulegen, besteht darin, dass die Schwenkachsen der Rotorblätter innerhalb der Rotorblätter in der Nähe, aber mit Abstand von der Vorderkante angeordnet sind, und dass der Schwenkbereich der Rotorblätter jeweils durch einen einzelnen Anschlag festgelegt ist, der innerhalb des Umfangskreises angeordnet ist.

Es ist aber auch denkbar, dass die Schwenkachsen der Rotorblätter in den Vorderkanten der Rotorblätter angeordnet sind, und dass der Schwenkbereich der Rotorblätter jeweils durch ein kreisbogenförmiges Begrenzungselement festgelegt ist, welches die Schwenkachse konzentrisch umgibt und mit seinen Enden jeweils einen Anschlag bildet.

Soll die Anlage besonders leicht gebaut sein, ist es von Vorteil, wenn die Lagerebenen durch um die Achse drehende Speichenräder gebildet werden.

Um den Winddruck auf die einzelnen Rotorblätter nicht zu gross werden zu lassen, ist es zweckmässig, wenn die Windkraftanlage mehrere Rotoren umfasst, die in unterschiedlicher Höhe angeordnet sind. Dies ist ohne grösseren Flächenverbrauch möglich, wenn die Rotoren übereinander angeordnet sind und um dieselbe Achse drehen.

Insbesondere können dabei unterschiedliche Windgeschwindigkeiten in unterschiedlichen Höhen besser ausgenutzt werden, wenn die Rotoren unabhängig voneinander drehbar sind.

Wenn die Rotorblätter) ein aerodynamisches, vorzugsweise gestreckt tropfenförmiges, Querschnittsprofil mit einem spitzen Ende und einem runden Ende aufweisen, ist es von. Vorteil, dass die Schwenkachsen der Rotorblätter innerhalb der Rotorblätter in der Nähe, aber mit Abstand von dem runden Ende angeordnet sind, und dass der Schwenkbereich der Rotorblätter jeweils durch einen einzelnen Anschlag festgelegt ist, der innerhalb des Rotorblattes drehfest zur Schwenkachse angeordnet ist.

Besonders einfach und vorteilhaft kann die Leistung abgenommen werden, wenn der Rotor über eine Kraftübertragung wenigstens einen Kompressor antreibt, der eingangsseitig Luft ansaugt und ausgangsseitig mit einem Druckluftspeicher verbunden ist, und wenn an den Druckluftspeicher eine Turbine anschliessbar ist, welche zur Erzeugung von Strom einen Generator antreibt.

Zur besseren Anpassung an unterschiedliche Windstärken ist es günstig, wenn der Rotor über Kraftübertragung wahlweise mit mehreren Kompressoren verbindbar ist. Steigt die Windstärke, können zusätzlich Kompressoren zugeschaltet werden, um die zusätzliche Leistung zu verarbeiten, und umgekehrt.

Besonders kompakt wird die Windkraftanlage, wenn der Druckluftspeicher im Boden eingelassen ist und das Fundament der darüber angeordneten Windkraftanlage bildet.

### KURZE ERLÄUTERUNG DER FIGUREN

Die Erfindung soll nachfolgen anhand von Ausführungsbeispielen im Zusammenhang mit der Zeichnung näher erläutert werden. Es zeigen
- Fig. 1: in einer stark vereinfachten schematischen Darstellung eine Windkraftanlage in Form eines auf dem Widerstandsprinzip basierenden Vertikalläufers mit zwei Rotoren übereinander, wie sie zur Verwirklichung der Erfindung geeignet ist;
- Fig. 2: in der Draufsicht von oben den Rotor einer Windkraftanlage gemäss einem Ausführungsbeispiel der Erfindung;
- Fig. 3: in einer zu Fig. 2 vergleichbaren Darstellung in einem Ausschnitt den Rotor einer Windkraftanlage gemäss einem anderen Ausführungsbeispiel der Erfindung;
- Fig. 4: in verschiedenen Teilfiguren 4(a) bis 4(c) verschiedene Positionen und Stellungen eines Rotorblattes in dem Rotor gemäss Fig. 3;
- Fig. 5: die in einem Rotor gemäss Fig. 2 auftretenden Grössen;
- Fig. 6: im Detail die Ausbildung eines Rotors nach Fig. 2 mit einem Speichenrad zur Lagerung der Rotorblätter gemäss einem anderen Ausführungsbeispiel der Erfindung, wobei sich das Rotorblatt am einen Ende des Schwenkbereiches befindet;
- Fig. 7: den Rotor aus Fig. 6 mit dem Rotorblatt am anderen Ende des Schwenkbereiches;
- Fig. 8: in einer zu Fig. 2 vergleichbaren Darstellung einen Rotor mit aerodynamisch geformten Rotorblättern und dadurch erweiterten Winkelbereichen;
- Fig. 9: in vergrösserter Einzeldarstellung ein Rotorblatt aus Fig. 8;
- Fig. 10: in der Seitenansicht (Fig. 10a) und in axialer Blickrichtung eine Windkraftanlage gemäss einem anderen Ausführungsbeispiel der Erfindung mit Druckluftspeicherung; und
- Fig. 11: das stark vereinfachte Anlagenschema der Anlage aus Fig. 10.

### WEGE ZUR AUSFÜHRUNG DER ERFINDUNG

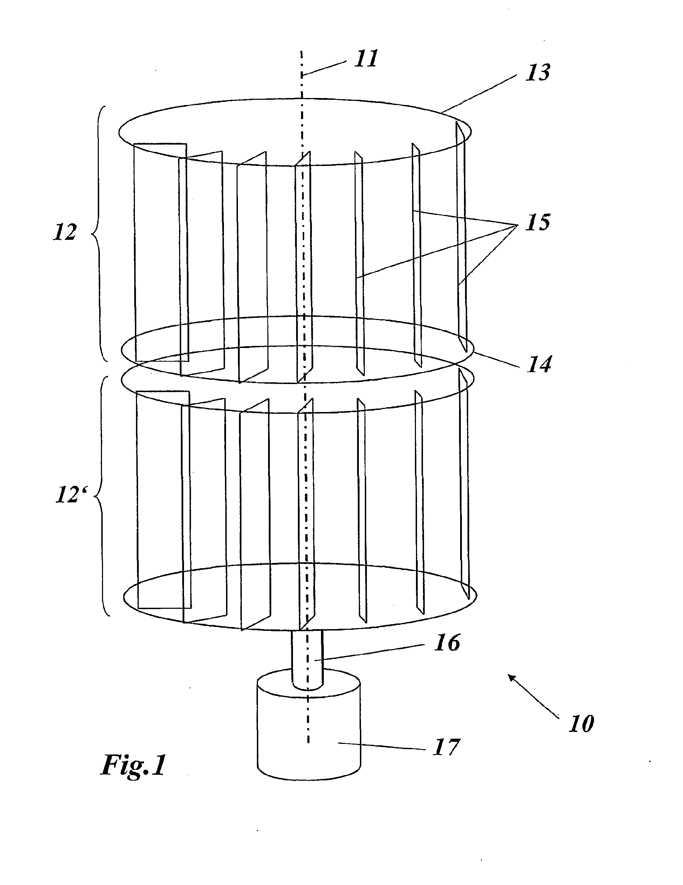

In Fig. 1 ist in einer stark vereinfachten schematischen Darstellung eine Windkraftanlage in Form eines auf dem Widerstandsprinzip basierenden Vertikalläufers mit zwei Rotoren übereinander dargestellt, wie sie zur Verwirklichung der Erfindung geeignet ist. Die Windkraftanlage 10 hat eine vertikale Achse 11, um die sich zwei Rotoren 12 und 12' drehen. Selbstverständlich können noch weitere Rotoren vorgesehen werden, die sich um die Achse 11 drehen. Ebenso gut kann aber auch nur ein einzelner Rotor 12 vorhanden sein. Der oder die Rotoren 12, 12' sind über eine Welle 16 mit einer Generatoreinheit 17 verbunden, die auch ein Getriebe zur Umsetzung der Drehgeschwindigkeit enthalten kann. Anstelle der Welle 16 kann ein Wellenstrang von mehreren konzentrisch ineinander liegenden Einzelwellen vorgesehen werden, über die die einzelnen Rotoren 12, 12' unabhängig ihre Drehung in die Generatoreinheit 17 einkoppeln. Dies ist insbesondere dann von Vorteil, wenn durch die in unterschiedlicher Höhe befindlichen Rotoren 12, 12' Strömungsschichten mit unterschiedlicher Windgeschwindigkeit optimal angezapft werden sollen.

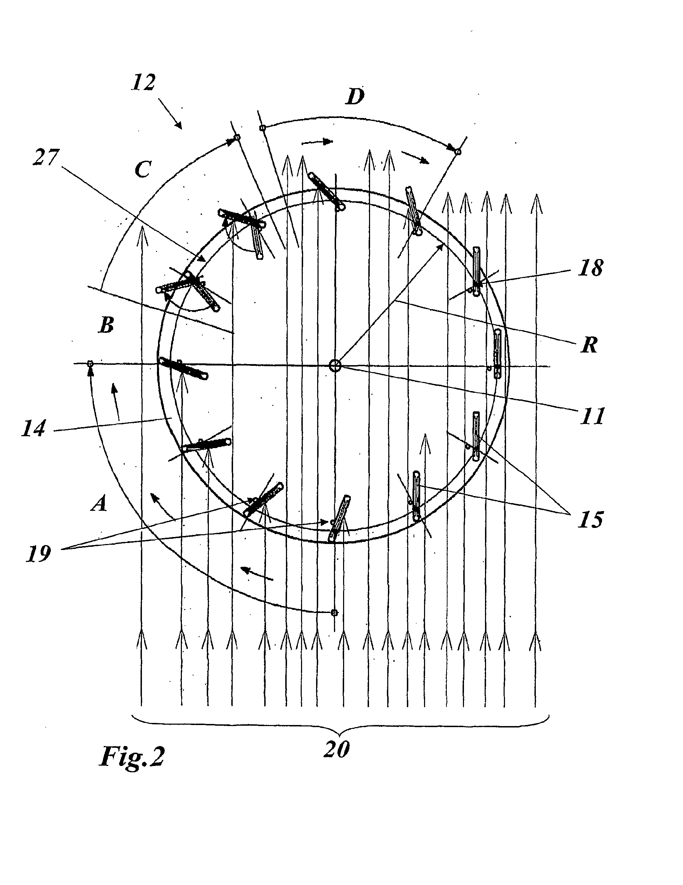

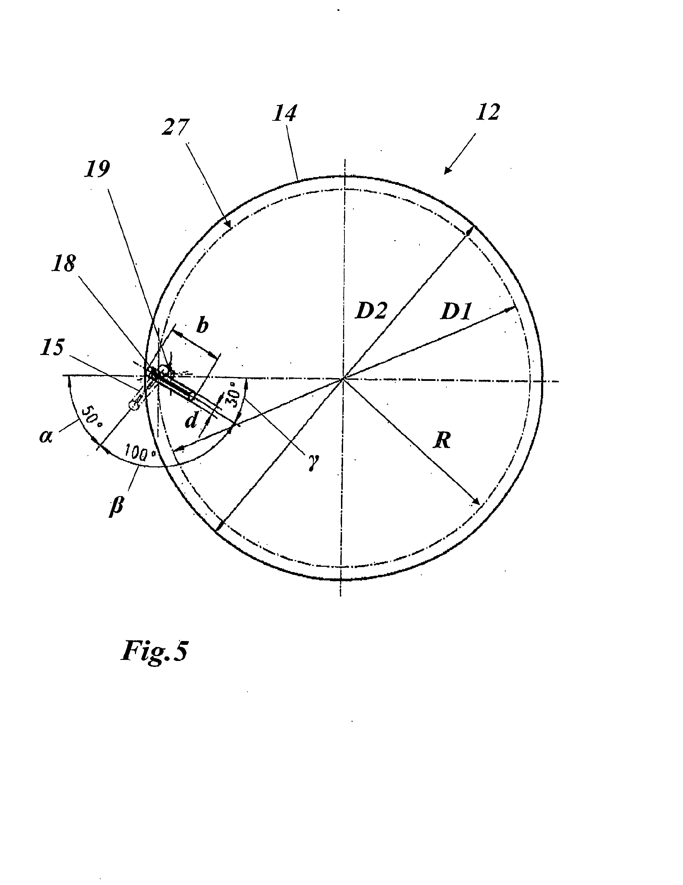

Jeder der Rotoren 12, 12' ist mit einer Mehrzahl von vertikal angeordneten Rotorblättern 15 ausgestattet, die zwischen einer unteren Lagerebene 14 und einer oberen Lagerebene 13 auf einem Umfangskreis verteilt schwenkbar gelagert sind. In Fig. 1 sind der Einfachheit und Übersichtlichkeit halber nur jeweils die vorderen Rotorblätter eingezeichnet. In Fig. 2 ist in der Draufsicht von oben auf einen Rotor 12 gemäss einem bevorzugten Ausführungsbeispiel der Erfindung die Wechselwirkung des Rotors 12 und der darin untergebrachten Rotorblät ter 15 mit einer Luftströmung (Wind) 20 gezeigt. Die obere Lagerebene 13 ist hierbei weggelassen, um die ungehinderte Sicht auf die Rotorblätter 15 zu ermöglichen. Insgesamt sind auf einem Umfangskreis 27 gleichmässig verteilt zwölf Rotorblätter 15 angeordnet, die jeweils um eine senkrecht stehende Schwenkachse 18 verschwenkbar sind. Der Schwenkbereich jedes Rotorblatts 15, der in Fig. 5 detailliert wiedergegeben ist und einen Winkel β von etwa 100° bis 115° umfasst, ist jeweils durch einen einzelnen pfostenförmigen Anschlag 19 begrenzt, der mit geringem Abstand von der Schwenkachse 18 innerhalb des Umfangskreises 27 platziert ist.

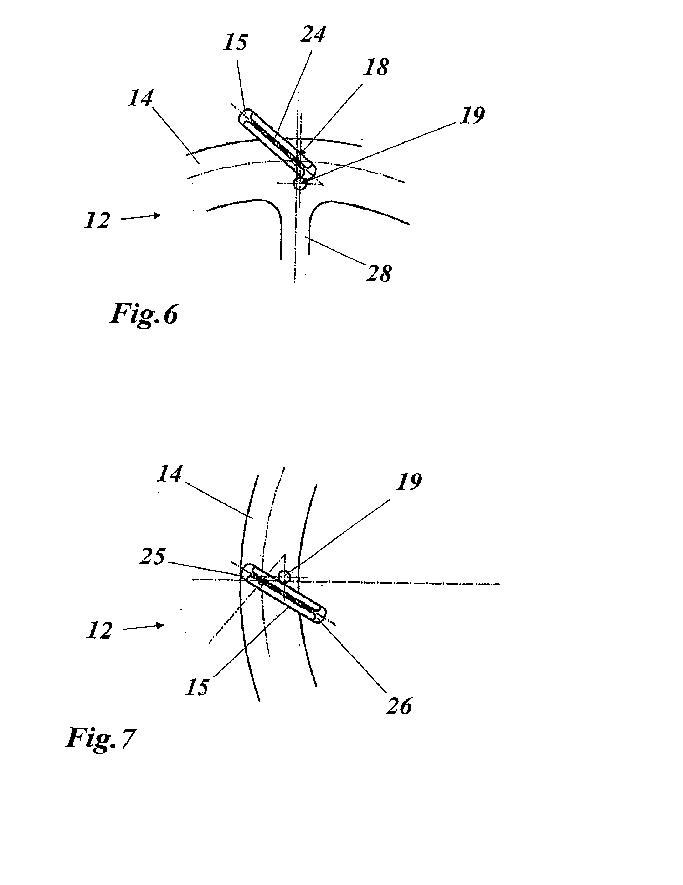

Jedes Rotorblatt 15 ist gerade ausgebildet und hat eine Vorderkante 25 und eine Hinterkante 26 (Fig. 7). Die Schwenkachsen 18 der Rotorblätter 15 sind innerhalb der Rotorblätter 15 in der Nähe, aber mit Abstand von der Vorderkante 25 angeordnet. In der einen Endposition des Schwenkbereiches (Fig. 6) schwenkt der zwischen Schwenkachse 18 und Vorderkante 25 liegende Abschnitt des Rotorblattes gegen den Anschlag 19. In der anderen Endposition (Fig. 7) schwenkt der zwischen Schwenkachse 18 und Hinterkante 26 liegende Abschnitt des Rotorblattes 15 gegen den Anschlag 19. Wie aus Fig. 5 zu entnehmen ist, schliessen die Rotorblätter 15 jeweils in einer Endposition des Schwenkbereichs (β) mit dem durch die Schwenkachse 18 gehenden Radiusvektor des Umfangskreises 27 einen Winkel α von etwa 50° ein, und in der anderen Endposition des Schwenkbereichs (β) einen Winkel 180°-γ von etwa 150° bis 165°.

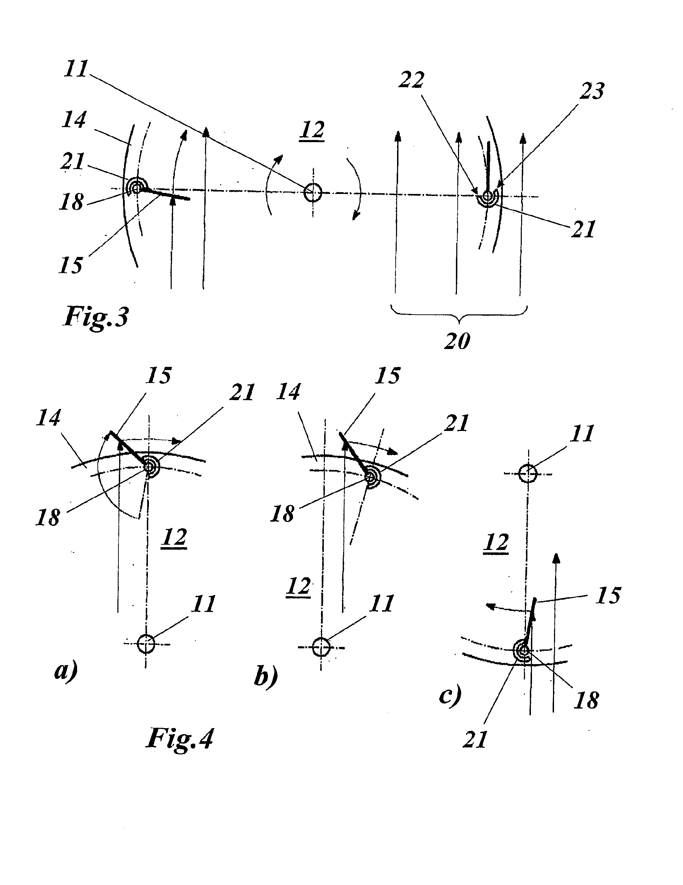

In einer anderen Ausgestaltung, die beispielhaft in Fig. 3 und 4 wiedergegeben ist, sind die Schwenkachsen 18 der Rotorblätter 15 direkt in den Vorderkanten 25 der Rotorblätter 15 angeordnet. In diesem Fall ist der Schwenkbereich (β) der Rotorblätter 15 jeweils durch ein kreisbogenförmiges Begrenzungselement 21 festgelegt, welches die Schwenkachse 18 konzentrisch umgibt und mit seinen Enden jeweils einen Anschlag 22 bzw. 23 bildet.

Wesentlich für die Erfindung ist die vergleichsweise geringe Breite b der einzelnen Rotorblätter 15 (Fig. 5). Die Breite b beträgt weniger als ungefähr 1/3 des Radius R des Umfangskreises 27. Hierdurch ist es möglich, vergleichsweise viele Rotorblätter 15 auf dem Umfangskreis 27 unterzubringen, ohne dass der Schwenkbereich deswegen begrenzt werden muss. Die Wechselwirkung des Rotors 12 bzw. der Rotorblätter 15 mit der Luftströmung wird so stärker unterteilt, was zu einer besseren Ausnutzung im Volumen und zu einem gleichmässigeren Lauf führt.

Wichtig ist auch die Grösse und Lage des Schwenkbereiches der Rotorblätter gemäss Fig. 5. Hierdurch ergeben sich bei einem Umlauf des Rotors 12 im Uhrzeigersinn gemäss Fig. 2 und bei der dort eingezeichneten Windrichtung sich verändernde Rotorblattstellungen, die sich in verschiedene Winkelbereiche A bis D unterteilen und einordnen lassen: In einem ersten Winkelbereich A, der als Antriebsbereich bezeichnet werden kann, liegen die Rotorblätter 15 am Anschlag 19 an und stehen derart quer zur Luftströmung 20, dass ein antreibendes Drehmoment resultiert. Im Winkelbereich B ist die Situation bezüglich der Stellung des Rotorblattes 15 labil, weil hier die Ablösung des Blattes vom Anschlag 19 beginnt. Im Winkelbereich C schwenkt das Rotorblatt 15 nach aussen heraus und schlägt von der anderen Seite gegen den Anschlag 19. Auch hier resultiert ein antreibendes Drehmoment. Aufgrund der Wirkung der Luftströmung 20 wird durch die gewählte Lage des Schwenkbereiches auch in einem zusätzlichen Antriebsbereich (Winkelbereich D) noch ein antreibendes Drehmoment aufgebracht (siehe auch Fig. 4a und 4b), bis das Rotorblatt sich später vom Anschlag 19 löst und sich parallel zur Luftströmung stellt (rechte Seite der Fig. 2 und Fig. 3), um noch später wieder in den Winkelbereich A einzutreten (siehe auch Fig. 4c).

Durch die Lage und Grösse des Schwenkbereiches der Rotorblätter wird die Energie der Luftströmung 20 optimal ausgenutzt. Hierzu trägt auch die Aufteilung der GesamtRotorblattfläche auf eine Vielzahl von vergleichsweise schmalen Rotorblättern 15 bei. Durch diese Aufteilung wird gleichzeitig der Lauf des Rotors 12 vergleichmässigt und die Grösse der mit dem Schwenken verbundenen Störkräfte verringert. Eine weitere Verbesserung lässt sich erzielen, wenn die Dicke d der Rotorblätter 15 in einem Mittelbereich 24 zwischen der Vorderkante 25 und der Hinterkante 26 reduziert ist (Fig. 6). Über die damit einhergehende Gewichtsersparnis pro Rotorblatt 15 lässt sich ohne Einbusse an Festigkeit weiter Gewicht sparen, wenn die Lagerebenen 13, 14 durch um die Achse 11 drehende Speichenräder 28 gebildet werden (Fig. 6).

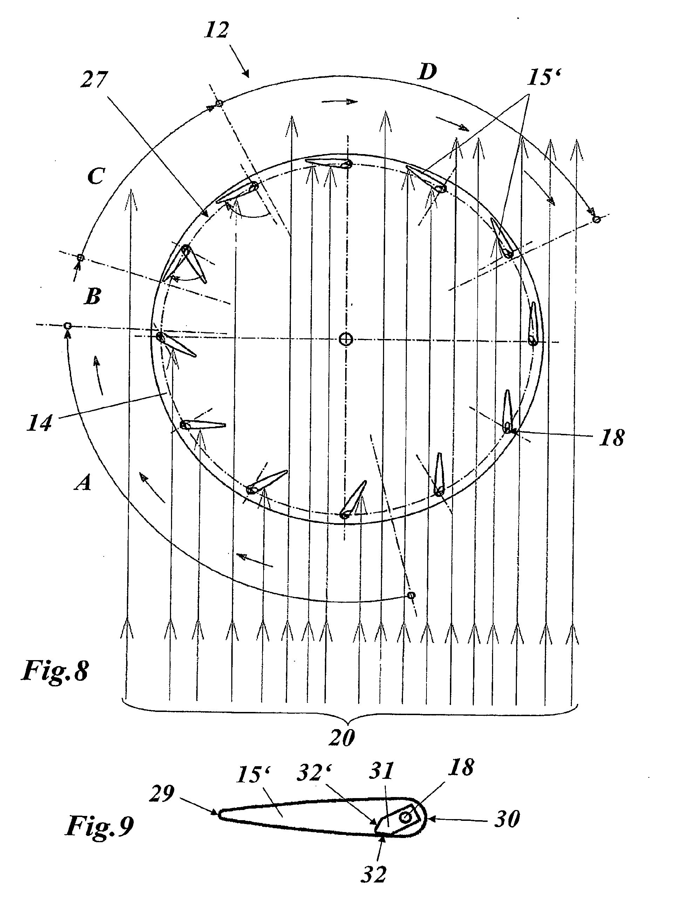

Anstelle der in Fig. 6 und 7 gezeigten Rotorblätter 15 können aber, auch aerodynamisch optimierte Rotorblätter 15' gemäss Fig. 9 eingesetzt werden, die sich durch ein gestreckt tropfenförmiges Querschnittsprofil mit einem spitzen Ende 29 und einem runden Ende 30 auszeichnen. Die Schwenkachse 18 ist hier am runden Ende 30 angeordnet. Innerhalb des Rotorblattes 15' ist drehfest ein Anschlag 31 montiert, der zwei Anschlagflächen 32 und 32' aufweist, die in einem spitzen Winkel zueinander orientiert sind. In der einen Endstellung des Schwenkbereichs (wie in Fig. 9 dargestellt) liegt das Rotorblatt 15' mit der einen Innenseite an der unteren Anschlagfläche 32 an. In der anderen Endstellung, wenn das Rotorblatt 15' gegen den Uhrzeigersinn um die Schwenkachse 18 verschwenkt worden ist, liegt das Rotorblatt 15' mit der anderen Innenseite an der oberen Anschlagfläche 32' an. Durch die innenliegende Anordnung ist die Anschlagsmechanik gegen äussere Einflüsse wie z.B. Vereisung oder Verschmutzung oder Beschädigung geschützt und verbessert gleichzeitig die Aerodynamik. Werden derartige Rotorblätter 15' gemäss Fig. 8 in den Rotor 12 eingebaut, ergeben sich gegenüber Fig. 2 vergrösserte Winkelbereiche A und D.

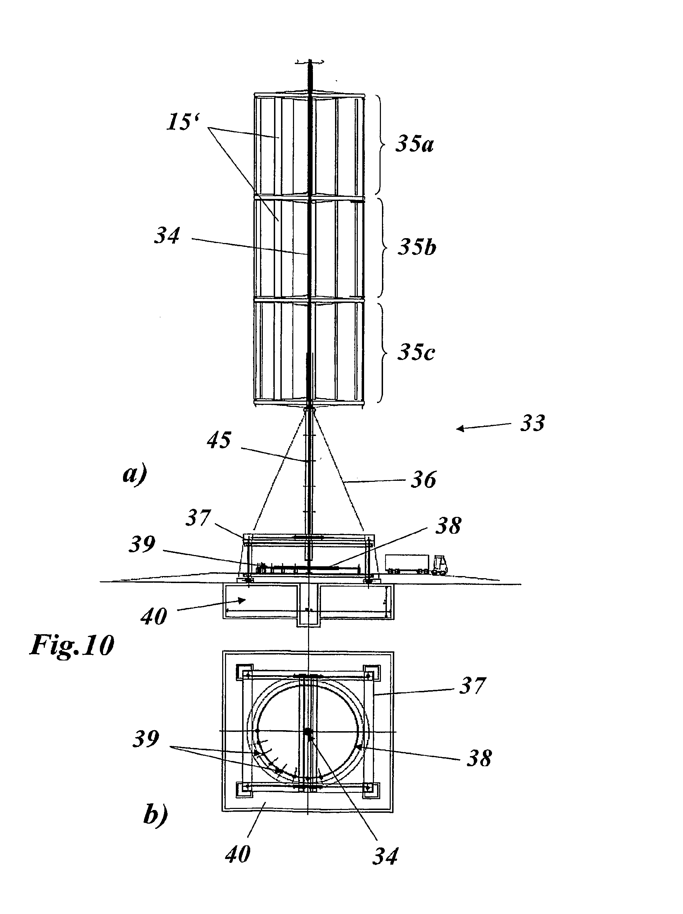

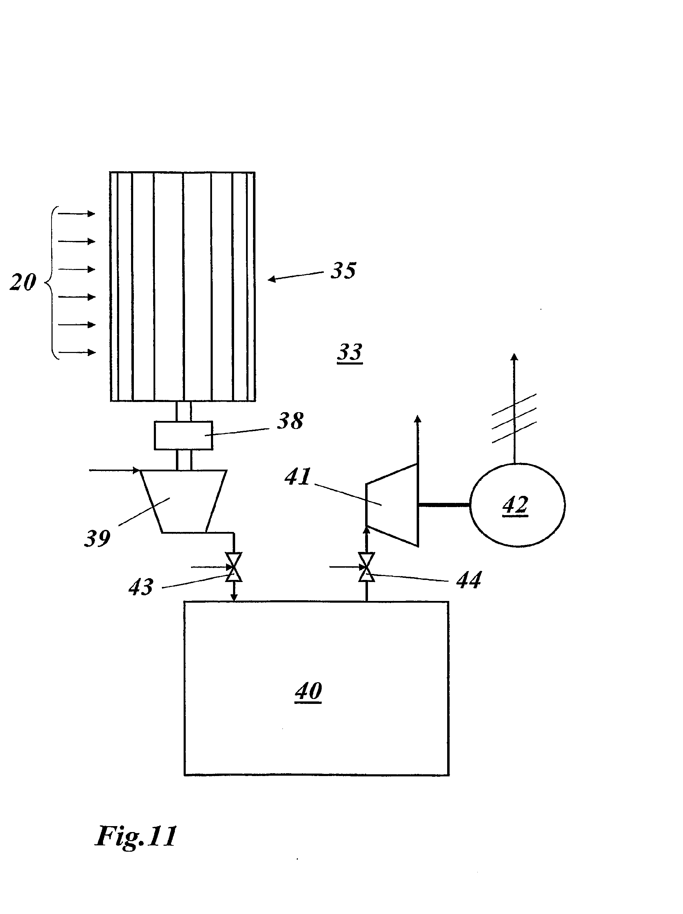

Da der Wind an vielen Aufstellungsorten von Windkraftanlagen nicht gleichmässig und durchgehend weht, ist es betriebstechnisch von Vorteil, wenn die erzeugte Energie einfach und wirkungsvoll gespeichert und bei Bedarf wieder ausgespeichert werden kann. Der beschriebene Rotor, der als Widerstandsläufer von Anfang an ein grosses Drehmoment abgibt, eignet sich besonders gut für den Betrieb eines oder mehrerer Kompressoren. Wird mit den Kompressoren Luft angesaugt und komprimiert, kann die erzeugte Druckluft in einem Druckluftspeicher gespeichert werden und bei Bedarf eine Turbine oder einen Druckluftmotor antreiben, der über einen angeflanschten Generator Strom erzeugt. Eine solche Windkraftanlage gemäss der Erfindung mit Druckluftspeicherung ist in Fig. 10 in der bevorzugten baulichen Ausgestaltung und in Fig. 11 mit einem stark vereinfachten Anlagenschema wiedergegeben.

Bei der Windkraftanlage 33 der Fig. 10 ist in den Boden ein Druckluftspeicher 40 in Form eines beispielsweise aus Beton bestehenden Behälters eingelassen. Der Druckluftspeicher dient gleichzeitig als Fundament für die darüber aufgebaute Windkraftanlage. An einem Mast 45 mit einer vertikalen zentralen Achse 34 sind übereinander drei Rotoren oder Zellen 35a, 35b und 35c angeordnet, die beispielsweise den in Fig. 8 gezeigten Aufbau haben. Der Mast 45 ist in einem auf dem Fundament aufgebauten Gestell 37 verankert und wird über eine seitliche Abspannung 36 stabilisiert. Innerhalb des Gerüstes 37 ist eine mit den Rotoren 35a, b, c in Verbindung stehende Kraftübertragung 38, beispielsweise in Form eines Rades oder Drehkranzes, angeordnet, über die am Umfang verteilte Kompressoren 39 wahlweise zuschaltbar angetrieben werden können.

Im stark vereinfachten Anlagenschema der Fig. 11 treibt der Rotor 35 über die Kraftübertragung 38 einen Kompressor 39 an, der am Eingang Luft ansaugt, verdichtet und am Ausgang über ein erstes steuerbares Ventil 43 an den Druckluftspeicher 40 abgibt. Wenn elektrische Energie erzeugt werden soll, wird dem Druckluftspeicher 40 über ein zweites steuerbares Ventil 44 Druckluft entnommen und in einer Turbine 41 (oder einem Druckluftmotor) unter Arbeitsleistung entspannt. Die Turbine 41 treibt einen Generator 42 an, der Drehstrom erzeugt und - nach entsprechender Spannungs- und Frequenzanpassung - in ein örtliches oder überörtliches Netz abgibt. Wird gleichzeitig Druckluft eingespeichert und entnommen, dient der Druckluftspeicher 40 gewissermassen als "Glättungskondensator".

Die Windkraftanlage 33 der Fig. 10 hat eine Gesamthöhe von beispielsweise 90m, die sich aufteilt auf 30m für den Mast 45 und 60m für die drei Rotoren/Zellen 35a, b, c von je 20m Höhe. Bei einer mittleren Windgeschwindigkeit von 5 m/s wird eine Leistung von 44kW erzeugt, was einer Energie von 1056kWh am Tag entspricht. Wenn der Druckspeicher 40 ein Speichervolumen von 5000m³ hat, können in ihm bei einem Druck von 10bar 1250kWh gespeichert werden.

Es können aber auch an der Kraftübertragung 38 direkt Generatoren angeordnet werden, die bei Bedarf ohne Zwischenschaltung der Druckluftspeicherung direkt elektrischen Strom erzeugen, so dass insgesamt ein besonders flexibler Betrieb der Anlage möglich ist.

### BEZUGSZEICHENLISTE

- 10,33: Windkraftanlage
- 11,34: Achse (vertikal)
- 12,12': Rotor
- 13,14: Lagerebene
- 15,15': Rotorblatt (Lamelle)
- 16: Welle
- 17: Generatoreinheit
- 18: Schwenkachse (Lamelle)
- 19,31: Anschlag
- 20: Luftströmung (Wind)
- 21: Begrenzungselement
- 22,23: Anschlag
- 24: Mittelbereich (dickenreduziert)
- 25: Vorderkante
- 26: Hinterkante
- 27: Umfangskreis
- 28: Speichenrad
- 29,30: Ende
- 32,32': Anschlagfläche
- 35: Rotor
- 35a,35b,35c: Rotor
- 36: Abspannung
- 37: Gestell
- 38: Kraftübertragung
- 39: Kompressor
- 40: Druckluftspeicher (Kaverne)
- 41: Turbine
- 42: Generator
- 43,44: Ventil
- 45: Mast
- A,..,D: Winkelbereich
- D1,D2: Durchmesser
- d: Dicke
- b: Breite
- R: Radius (Umfangskreis)
- α,β,γ: Winkel

## Patentansprüche

1. Windkraftanlage mit wenigstens einem um eine vertikale Achse drehbaren Rotor, welcher zwischen zwei horizontalen, mit Abstand übereinander liegenden Lagerebenen eine Mehrzahl von auf einem Umfangskreis gleichmässig verteilt angeordneten, jeweils um eine vertikale Schwenkachse schwenkbaren Rotorblättern umfasst, deren Schwenkbereich beidseitig durch einen Anschlag begrenzt ist, **dadurch gekennzeichnet, dass** die Breite (b) der Rotorblätter kleiner als im Wesentlichen 1/3 des Radius (R) des Umfangskreises ist.

2. Windkraftanlage nach Anspruch 1, **dadurch gekennzeichnet, dass** auf dem Umfangskreis (27) des Rotors (12, 12'; 35; 35a, 35b, 35c) zwölf oder mehr Rotorblätter (15, 15') schwenkbar angeordnet sind.

3. Windkraftanlage nach Anspruch 1 oder 2, **dadurch gekennzeichnet, dass** die Rotorblätter (15) als gerade Blätter ausgebildet sind.

4. Windkraftanlage nach Anspruch 3, **dadurch gekennzeichnet, dass** die Rotorblätter (15) jeweils eine Vorderkante (25) und einer Hinterkante (26) aufweisen und in der Dicke (d) zwischen der Vorderkante (25) und der Hinterkante (26) reduziert sind.

5. Windkraftanlage nach einem der Ansprüche 1 bis 4, **dadurch gekennzeichnet, dass** der Schwenkbereich der Rotorblätter (15) jeweils auf einen Winkel (β) von etwa 100115° begrenzt ist.

6. Windkraftanlage nach Anspruch 5, **dadurch gekennzeichnet, dass** die Rotorblätter (15) jeweils in einer Endposition des Schwenkbereichs (β) mit dem durch die Schwenkachse (18) gehenden Radiusvektor des Umfangskreises (27) einen Winkel (α) von etwa 50° und in der anderen Endposition des Schwenkbereichs (β) einen Winkel (180°-γ) von etwa 150-165° einschliessen.

7. Windkraftanlage nach Anspruch 4, **dadurch gekennzeichnet, dass** die Schwenkachsen (18) der Rotorblätter (15) innerhalb der Rotorblätter (15) in der Nähe, aber mit Abstand von der Vorderkante (25) angeordnet sind.

8. Windkraftanlage nach Anspruch 7, **dadurch gekennzeichnet, dass** der Schwenkbereich (β) der Rotorblätter (15) jeweils durch einen einzelnen Anschlag (19) festgelegt ist, der innerhalb des Umfangskreises (27) angeordnet ist.

9. Windkraftanlage nach Anspruch 4, **dadurch gekennzeichnet, dass** die Schwenkachsen (18) der Rotorblätter (15) in den Vorderkanten (25) der Rotorblätter (15) angeordnet sind.

10. Windkraftanlage nach Anspruch 9, **dadurch gekennzeichnet, dass** der Schwenkbereich (β) der Rotorblätter (15) jeweils durch ein kreisbogenförmiges Begrenzungselement (21) festgelegt ist, welches die Schwenkachse (18) konzentrisch umgibt und mit seinen Enden jeweils einen Anschlag (22, 23) bildet.

11. Windkraftanlage nach einem der Ansprüche 1 bis 10, **dadurch gekennzeichnet, dass** die Lagerebenen (13, 14) durch um die Achse (11) drehende Speichenräder (28) gebildet werden.

12. Windkraftanlage nach einem der Ansprüche 1 bis 11, **dadurch gekennzeichnet, dass** die Windkraftanlage (10) mehrere Rotoren (12, 12'; 35a, 35b, 35c) umfasst, die in unterschiedlicher Höhe angeordnet sind.

13. Windkraftanlage nach Anspruch 12, **dadurch gekennzeichnet, dass** die Rotoren (12, 12'; 35a, 35b, 35c) übereinander angeordnet sind und um dieselbe Achse (11, 34) drehen.

14. Windkraftanlage nach Anspruch 13, **dadurch gekennzeichnet, dass** die Rotoren (12, 12') unabhängig voneinander drehbar sind.

15. Windkraftanlage nach Anspruch 1 oder 2, **dadurch gekennzeichnet, dass** die Rotorblätter (15') ein aerodynamisches, vorzugsweise gestreckt tropfenförmiges, Querschnittsprofil mit einem spitzen Ende (29) und einem runden Ende (30) aufweisen.

16. Windkraftanlage nach Anspruch 15, **dadurch gekennzeichnet, dass** die Schwenkachsen (18) der Rotorblätter (15') innerhalb der Rotorblätter (15') in der Nähe, aber mit Abstand von dem runden Ende (30) angeordnet sind, und dass der Schwenkbereich (β) der Rotorblätter (15) jeweils durch einen einzelnen Anschlag (31) festgelegt ist, der innerhalb des Rotorblattes (15') drehfest zur Schwenkachse (18) angeordnet ist.

17. Windkraftanlage nach einem der Ansprüche 1 bis 16, **dadurch gekennzeichnet, dass** der Rotor (35) über eine Kraftübertragung (38) wenigstens einen Kompressor (39) antreibt, der eingangsseitig Luft ansaugt und ausgangsseitig mit einem Druckluftspeicher (40) verbunden ist, und dass an den Druckluftspeicher (40) eine Turbine (41) anschliessbar ist, welche zur Erzeugung von Strom einen Generator (42) antreibt.

18. Windkraftanlage nach Anspruch 17, **dadurch gekennzeichnet, dass** der Rotor (35) über Kraftübertragung (38) wahlweise mit mehreren Kompressoren (39) verbindbar ist.

19. Windkraftanlage nach Anspruch 17 oder 18, **dadurch gekennzeichnet, dass** der Druckluftspeicher (40) im Boden eingelassen ist und das Fundament der darüber angeordneten Windkraftanlage (33) bildet.

## Claims

1. A wind power installation having at least one rotor that can rotate about a vertical axis and that comprises, between two horizontal mounting planes, which are located above one another at a distance from each other, a plurality of rotor blades that are evenly distributed over a circumferential circle and can each pivot about a vertical pivoting axis, the pivoting range of which rotor blades is limited at both ends by a stop, **characterised in that** the width (b) of the rotor blades is less than substantially 1/3 of the radius (R) of the circumferential circle.

2. The wind power installation as claimed in claim 1, **characterised in that** twelve or more rotor blades (15, 15') are provided on the circumferential circle (27) of the rotor (12, 12'; 35; 35a, 35b, 35c) so as to be pivotable.

3. The wind power installation as claimed in claim 1 or 2, **characterised in that** the rotor blades (15) are formed as straight blades.

4. The wind power installation as claimed in claim 3, **characterised in that** the rotor blades (15) each have a leading edge (25) and a trailing edge (26) and have a reduced thickness (d) between the leading edge (25) and the trailing edge (26).

5. The wind power installation as claimed in any one of claims 1 to 4, **characterised in that** the pivoting range of the rotor blades (15) is in each case limited to an angle (β) of approx. 100-115°.

6. The wind power installation as claimed in claim 5, **characterised in that** in each case in an end position of the pivoting range (β), the rotor blades (15) enclose an angle (α) of approx. 50° with the radius vector of the circumferential circle (27), which passes through the pivot axis (18), and in the other end position of the pivoting range (β), enclose an angle (180°-γ) of approx. 150-165°.

7. The wind power installation as claimed in claim 4, **characterised in that** the pivot axes (18) of the rotor blades (15) are positioned within the rotor blades (15) in the vicinity of, but at a distance from, the leading edge (25).

8. The wind power installation as claimed in claim 7, **characterised in that** the pivoting range (β) of the rotor blades (15) is in each case defined by a single stop (19) that is located within the circumferential circle (27).

9. The wind power installation as claimed in claim 4, **characterised in that** the pivot axes (18) of the rotor blades (15) are positioned in the leading edges (25) of the rotor blades (15).

10. The wind power installation as claimed in claim 9, **characterised in that** the pivoting range (β) of the rotor blades (15) is in each case determined by a limiting element (21) in the form of a circular arc, which concentrically surrounds the pivot axis (18) and forms a stop (22, 23) with each of its ends.

11. The wind power installation as claimed in any one of claims 1 to 10, **characterised in that** the mounting planes (13, 14) are formed by spoke wheels (28) that rotate about the axis (11).

12. The wind power installation as claimed in any one of claims 1 to 11, **characterised in that** the wind power installation (10) comprises a plurality of rotors (12, 12'; 35a, 35b, 35c) located at different heights.

13. The wind power installation as claimed in claim 12, **characterised in that** the rotors (12, 12'; 35a, 35b, 35c) are arranged one above the other and rotate about the same axis (11, 34).

14. The wind power installation as claimed in claim 13, **characterised in that** the rotors (12, 12') can rotate independently of each other.

15. The wind power installation as claimed in claim 1 or 2, **characterised in that** the rotor blades (15') have an aerodynamic, preferably elongated, drop-shaped cross-sectional profile with a pointed end (29) and a rounded end (30).

16. The wind power installation as claimed in claim 15, **characterised in that** the pivot axes (18) of the rotor blades (15) are provided within the rotor blades (15') in the vicinity of, but at a distance from, the rounded end (30), and **in that** the pivoting range (β) of the rotor blades (15) is in each case determined by a single stop (31) that is located within the rotor blade (15') rotationally mixed in relation to the pivot axis (18).

17. The wind power installation as claimed in any one of claims 1 to 16, **characterised in that** the rotor (35) drives at least one compressor (39) via a power transmission (38), which compressor (39) sucks in air on the input side and is connected to a compressed air reservoir (40) on the output side, and **in that** a turbine (41) can be connected to the compressed air reservoir (40), which turbine (41) drives a generator (42) in order to produce electricity.

18. The wind power installation as claimed in claim 17, **characterised in that** the rotor (35) can be selectively connected to a plurality of compressors (39) via a power transmission (38).

19. The wind power installation as claimed in claim 17 or 18, **characterised in that** the compressed air reservoir (40) is recessed into the ground and forms the foundation of the wind power installation (33) located above it.

## Revendications

1. Eolienne comprenant au moins un rotor, apte à tourner sur un axe vertical, qui comporte entre deux plans de paliers horizontaux, disposés à distance l'un au-dessus de l'autre, une pluralité pales de rotor réparties uniformément sur un cercle périphérique et aptes à pivoter chacune sur un axe de pivotement vertical dont la région de pivotement est délimitée des deux côtés par une butée, **caractérisée en ce que** la largeur (b) des pales du rotor est inférieure à sensiblement 1/3 du rayon (R) du cercle périphérique.

2. Eolienne selon la revendication 1, **caractérisée en ce que** douze pales de rotor (15, 15') ou plus sont disposées de manière pivotante sur le cercle périphérique (27) du rotor (12, 12' ; 35 ; 35a, 35b, 35c).

3. Eolienne selon la revendication 1 ou 2, **caractérisée en ce que** les pales (15) du rotor sont configurées sous la forme de pales droites.

4. Eolienne selon la revendication 3, **caractérisée en ce que** les pales (15) du rotor comportent chacune un bord d'attaque (25) et un bord de fuite (26) et ont entre le bord d'attaque (25) et le bord de fuite (26) une épaisseur (d) réduite.

5. Eolienne selon l'une des revendications 1 à 4, **caractérisée en ce que** la zone de pivotement de chacune des pales (15) du rotor est limitée à un angle (β) d'environ 100 à 115°.

6. Eolienne selon la revendication 5, **caractérisée en ce que** chacune des pales (15) du rotor forme avec le rayon vecteur du cercle périphérique (27), passant par l'axe de pivotement (18), un angle (α) d'environ 50° dans une position d'extrémité de la zone de pivotement (β) et un angle (180°-γ) d'environ 150 à 165° dans l'autre position d'extrémité de la zone de pivotement (β).

7. Eolienne selon la revendication 4, **caractérisée en ce que** les axes de pivotement (18) des pales (15) du rotor sont disposés à l'intérieur des pales (15) du rotor à proximité du bord d'attaque (25) mais étant espacés de celui-ci.

8. Eolienne selon la revendication 7, **caractérisée en ce que** la zone de pivotement (β) de chacune des pales (15) du rotor est définie par une seule butée (19) qui est disposée dans le cercle périphérique (27).

9. Eolienne selon la revendication 4, **caractérisée en ce que** les axes de pivotement (18) des pales (15) du rotor sont disposés dans les bords d'attaque (25) des pales (15) du rotor.

10. Eolienne selon la revendication 9, **caractérisée en ce que** la zone de pivotement (β) de chacune des pales (15) du rotor est définie par un élément de limitation (21) en forme d'arc de cercle qui entoure concentriquement l'axe de pivotement (18) et forme avec chacune de ses extrémités une butée (22, 23).

11. Eolienne selon l'une des revendications 1 à 10, **caractérisée en ce que** les plans (13, 14) des paliers sont formés par des roues à rayons (28) tournant sur l'axe (11).

12. Eolienne selon l'une des revendications 1 à 11, **caractérisée en ce que** l'éolienne (10) comporte une pluralité de rotors (12, 12' ; 35a, 35b, 35c) qui sont disposés à des hauteurs différentes.

13. Eolienne selon la revendication 12, **caractérisée en ce que** les rotors (12, 12' ; 35a, 35b, 35c) sont disposés l'un au-dessus de l'autre et tournent sur le même axe (11, 34).

14. Eolienne selon la revendication 13, **caractérisée en ce que** les rotors (12, 12') sont aptes à tourner l'un indépendamment de l'autre.

15. Eolienne selon la revendication 1 ou 2, **caractérisée en ce que** les pales (15') du rotor ont un profil en coupe transversale aérodynamique, de préférence allongé en forme de goutte, qui comporte une extrémité pointue (29) et une extrémité arrondie (30).

16. Eolienne selon la revendication 15, **caractérisée en ce que** les axes de pivotement (18) des pales (15') du rotor sont disposés à l'intérieur des pales (15') du rotor à proximité de l'extrémité arrondie (30) mais en étant espacés de celle-ci, et **en ce que** la zone de pivotement (β) de chacune des pales (15) du rotor est définie par une seule butée (31) qui est disposée à l'intérieur de la pale (15') du rotor de façon immobile en rotation par rapport à l'axe de pivotement (18).

17. Eolienne selon l'une des revendications 1 à 16, **caractérisée en ce que** le rotor (35) entraîne par le biais d'une transmission de puissance (38) au moins un compresseur (39) qui aspire de l'air côté entrée et qui est reliée côté sortie à un réservoir d'air comprimé (40), et **en ce qu'**une turbine (41) peut être raccordée au réservoir d'air comprimé (40), laquelle entraîne un générateur (42) pour produire de l'électricité.

18. Eolienne selon la revendication 17, **caractérisée en ce que** le rotor (35) peut être raccordé par le biais d'une transmission de puissance (38) au choix à plusieurs compresseurs (39).

19. Eolienne selon la revendication 17 ou 18, **caractérisée en ce que** le réservoir d'air comprimé (40) est enfoui dans le sol et forme l'assise de l'éolienne (33) disposée au-dessus.
